# EUROPÄISCHE PATENTSCHRIFT

(11) **EP 3 305 055 B1**
(45) Veröffentlichungstag und Bekanntmachung des Hinweises auf die Patenterteilung: **17.04.2019**
(21) Anmeldenummer: 17001585.3
(22) Anmeldetag: 25.09.2017
(51) Int. Cl.: A01C 17/00, A01B 79/00

(54) **VERFAHREN ZUM GLEICHMÄSSIGEN VERTEILEN VON STREUGUT AN LAGEN MIT VERSCHIEDENER BODENNEIGUNG MITTELS EINES SCHEIBENSTREUERS UND HIERFÜR AUSGEBILDETER SCHEIBENSTREUER**
METHOD FOR THE EVEN DISTRIBUTION OF SCATTERING MATERIAL IN PLACES WITH DIFFERENT GROUND INCLINATIONS BY MEANS OF A SPREADER AND A RESPECTIVELY CONFIGURED SPREADER
PROCÉDÉ DE DISTRIBUTION UNIFORME DE MATÉRIAUX GRANULAIRES DANS LES EMPLACEMENTS À L'INCLINAISON DU SOL DIFFÉRENTE AU MOYEN D'UN ÉPANDEUR À ROULEAUX ET ÉPANDEUR À ROULEAUX CONFIGURÉ

(30) Priorität: 05.10.2016 DE 102016011826
(43) Veröffentlichungstag der Anmeldung: 11.04.2018
(73) Patentinhaber: RAUCH Landmaschinenfabrik GmbH, 76547 Sinzheim (DE); Institut National de Recherche en Sciences et Technologies pour l'Environnement et l'Agriculture (IRSTEA), 92160 Antony (FR)
(72) Erfinder: Rauch, Norbert, 76547 Sinzheim (DE); Stöcklin, Volker, 77975 Ringsheim (DE); Thullner, Christian, 76547 Sinzheim (DE); Piron, Emmanuel, 03300 Creuzier le Vieux (FR); Miclet, Denis, 03150 Varennes-sur-Allier (FR); Abbou-Ou-Cherif, El mehdi, 03150 Varennes-sur Allier (FR)
(74) Vertreter: Lichti - Patentanwälte Partnerschaft mbB

(56) Entgegenhaltungen:
- WO-A1-2009/045114
- DE-A1-102007 049 652
- FR-A1- 2 882 496

## Beschreibung

Die Erfindung betrifft ein Verfahren zum gleichmäßigen Verteilen von Streugut an Lagen mit verschiedener Bodenneigung mittels eines Scheibenstreuers, welcher wenigstens eine Verteilerscheibe und wenigstens ein der Verteilerscheibe zugeordnetes Dosierorgan umfasst, wobei das Dosierorgan mittels einer Steuer- und/oder Regeleinrichtung auf- und zusteuerbar ist. Die Erfindung bezieht sich ferner auf einen zur Durchführung eines solchen Verfahrens geeigneten Scheibenstreuer, welcher wenigstens eine Verteilerscheibe und wenigstens ein der Verteilerscheibe zugeordnetes Dosierorgan umfasst, wobei das Dosierorgan mittels einer Steuer- und/oder Regeleinrichtung auf- und zusteuerbar ist. Derartige Scheibenstreuer finden insbesondere in Form von Zweischeiben-Düngerstreuern in der Landwirtschaft zur Verteilung von Streugut, wie mineralischem und organischem Dünger und dergleichen, aber auch in Form von Winterdienststreumaschinen zur Verteilung von Streusalz und/oder Splitt verbreiteten Einsatz. Ihre Vorteile liegen dabei vornehmlich in ihrer einfachen Bedienbarkeit und hohen Leistungsfähigkeit bei verhältnismäßig geringen Investitionskosten. Insbesondere im Falle von landwirtschaftlichen Scheibenstreuern haben sich vornehmlich Zweischeiben-Düngerstreuer etabliert, welche mit einem Paar von Verteilerscheiben mit diesen zugeordneten Dosierorganen ausgestattet sind.

Um für die gewünschte Verteilung des Streugutes auf dem Boden zu sorgen, lassen sich bei gattungsgemäßen Scheibenstreuern einerseits die Dosierung des Massenstromes an Streugut auf die einem jeweiligen Dosierorgan zugeordnete Verteilerscheibe, andererseits die Verteilung des Streugutes durch die Verteilerscheibe(n) einstellen bzw. regeln. Für letzteres ist es üblich, Einstellmittel zum Einstellen des Scheibenstreuers auf verschiedene Arbeitsbreiten, Streugüter und/oder Verteilarten vorzusehen. Die Dosierorgane umfassen üblicherweise einen aktuatorisch betätigten Dosierschieber, welcher mit einer Dosieröffnung zusammenwirkt, können selbstverständlich aber auch andersartig aufgebaut sein, wie beispielsweise in Form von Zellenrädern und dergleichen.

Eine gleichmäßige Verteilung des Streugutes auf dem Boden, wie sie zur Vermeidung von lokalen Über- bzw. Unterdünungen grundsätzlich angestrebt wird, ist mittels Ein- oder insbesondere Zweischeibenstreuern in der Ebene problemlos möglich, wobei auf dem zu bestreuenden Feld in der Regel mehrere, üblicherweise etwa parallele Fahrgassen angelegt sind, welche der Scheibenstreuer im Fahrgassenbetrieb nacheinander durchführt, um eine definierte Überlappung der nebeneinander abgelegten Streufächer zu erzielen. Grundlage ist die etwa halbkreis- bzw. hörnchenförmige Streugutablage, bei welcher die Menge an Verteilgut innerhalb des Halbkreises bzw. Hörnchens von der Mitte zu den Randzonen abnimmt. Beim Anschlussfahren in der benachbarten Fahrgasse erfolgt eine entsprechend von innen nach außen abnehmende Streugutablage, so dass sich diese in der Überlappungszone zu einer weitestgehend gleichmäßigen Streugutverteilung ergänzen.

Als demgegenüber problematischer erweist sich die Gewährleistung einer gleichmäßigen Streugutverteilung auf Hanglagen, wobei das Problem vornehmlich darin besteht, dass bei einer Fahrt eines Zweischeibenstreuers am geneigten Hang der Dünger aufgrund der Schwerkraft nicht, wie es beim Streuen in der Ebene der Fall ist, an der gleichen Stelle auf die Verteilerscheibe trifft, d.h. sein Aufgabepunkt auf die Verteilerscheiben wird in Abhängigkeit der Hangneigung verlagert. Der hieraus resultierende Streufehler ist umso größer, je größer die Fallhöhe des Düngers zwischen dem Dosierorgan und der Scheibenfläche und je größer die Neigungslage des Scheibenstreuers ist. Um dem zu begegnen, beschreibt die EP 2 415 338 B1 ein Verfahren zur gleichmäßigen Verteilung von Streugut an Hanglagen mittels eines Zweischeibenstreuers mit gesteuerten Einrichtungen zur Veränderung des Aufgabepunktes des Streugutes auf die umlaufenden Verteilerscheiben, wobei einerseits gegenüber der düngersorten- und arbeitsbreitenabhängigen Einstellung des Aufgabepunktes beim Streuen in der Ebene bei der Hangaufwärts- und bei der Hangabwärtsfahrt die Aufgabepunkte der rechten und linken Verteilerscheibe gleichsinnig verlagert werden und andererseits bei der Fahrt entlang des Hangs, also bei der Querhangfahrt, die Aufgabepunkte der rechten und linken Verteilerscheibe gegensinnig verlagert werden. Auf diese Weise ergibt sich eine wirksame Kompensation des infolge der Hangneigung ansonsten verursachten Streufehlers.

Weiter sind im Stand der Technik folgende Offenbarungen bekannt: FR 2 882 496 A1, DE 10 2007 049652 A1 und WO 2009/045114 A1.

Bislang in der Fachwelt noch gar nicht problematisiert worden ist indes eine Situation, in welcher sich ein Scheibenstreuer an Lagen mit verschiedenen Bodenneigungen bewegt und dabei folglich konvexe und/oder konkave Krümmungen des Bodens überfährt. In diesem Zusammenhang wurde nun erstmals festgestellt, dass sich hierbei nicht unerhebliche Streufehler ergeben können, welche vornehmlich in lokalen Unter- bzw. Überdüngen bestehen. Fährt beispielsweise der Scheibenstreuer über eine konkave Krümmung des Bodens hinweg, deren Scheitellinie sich vornehmlich senkrecht zur Fahrtrichtung erstreckt, so ergibt sich - in Fahrtrichtung entlang der jeweiligen Fahrgasse betrachtet - zunächst ein Bereich der Unterdüngung, weil sich der auf dem Boden abgelegte Streufächer infolge veränderter Neigung des Scheiben-streuers vorübergehend mit gegenüber der Fahrgeschwindigkeit höherer Geschwindigkeit nach vorne bewegt, während der Scheibenstreuer die konkave Krümmung überfährt, wonach sich ein Bereich der Überdüngung ergibt, weil sich der auf dem Boden abgelegte Streufächer nach dem Überfahren der konkaven Krümmung vorübergehend mit gegenüber der Fahrtgeschwindigkeit geringeren Geschwindigkeit nach vorne bewegt. Fährt der Scheibenstreuer hingegen beispielsweise über eine konvexe Krümmung des Bodens hinweg, deren Scheitellinie sich vornehmlich senkrecht zur Fahrtrichtung erstreckt, so ergibt sich - in Fahrtrichtung entlang der jeweiligen Fahrgasse betrachtet - in umgekehrter Weise zunächst ein Bereich der Überdüngung, weil sich der auf dem Boden abgelegte Streufächer infolge veränderter Neigung des Scheiben-streuers vorübergehend mit gegenüber der Fahrgeschwindigkeit geringeren Geschwindigkeit nach vorne bewegt, während der Scheibenstreuer die konvexe Krümmung überfährt, wonach sich ein Bereich der Unterdüngung ergibt, weil sich der auf dem Boden abgelegte Streufächer nach dem Überfahren der konvexen Krümmung vorübergehend mit gegenüber der Fahrtgeschwindigkeit höherer Geschwindigkeit nach vorne bewegt.

Die Lage solcher Bereiche der Über- bzw. Unterdüngung in Bezug auf die Scheitellinie der - konkaven oder konvexen - Krümmung des Bodens hängt zudem davon ab, ob der Scheibenstreuer die Krümmung des Bodens "von unten nach oben", d.h. z.B. von einem Bereich geringerer Neigung oder von einem im Wesentlichen ebenen Bereich in einen demgegenüber steileren Bereich hangaufwärts (Überfahrt einer konkaven Bodenkrümmung hangaufwärts) bzw. von einem Bereich höherer Neigung in einen demgegenüber flacheren Bereich oder in einen im Wesentlichen ebenen Bereich hangaufwärts (Überfahrt einer konvexen Bodenkrümmung hangaufwärts), oder "von oben nach unten", d.h. z.B. von einem Bereich höherer Neigung in einen demgegenüber flacheren Bereich oder in einen im Wesentlichen ebenen Bereich hangabwärts (Überfahrt einer konkaven Bodenkrümmung hangabwärts) bzw. von einem Bereich geringerer Neigung oder einem im Wesentlichen ebenen Bereich in einen demgegenüber steileren Bereich hangabwärts (Überfahrt einer konvexen Bodenkrümmung hangabwärts), durchfährt.

Der Erfindung liegt daher die Aufgabe zugrunde, ein Verfahren zum gleichmäßigen Verteilen von Streugut an Lagen mit verschiedener Bodenneigung mittels eines Scheibenstreuers sowie einen Scheibenstreuer der eingangs genannten Art auf möglichst einfache und kostengünstige Weise dahingehend weiterzubilden, dass Streufehler, insbesondere in Form von lokalen Unter- und Überdüngungen, wie sie bei der Überfahrt des Scheibenstreuers über konkave bzw. konvexe Krümmungen des Bodens gegenwärtig verursacht werden, zumindest weitgehend zu vermeiden.

In verfahrenstechnischer Hinsicht wird diese Aufgabe bei einem Verfahren der eingangs genannten Art dadurch gelöst, dass
- bei der Überfahrt einer konkaven Krümmung des Bodens, welche eine Scheitellinie mit einer senkrecht zur Fahrtrichtung des Scheibenstreuers angeordnete Erstreckungsrichtungskomponente aufweist, der mittels des Dosierorgans ausgebrachte Soll-Massenstrom an Streugut zunächst erhöht und sodann vermindert wird, und/oder
- bei der Überfahrt einer konvexen Krümmung des Bodens, welche eine Scheitellinie mit einer senkrecht zur Fahrtrichtung des Scheibenstreuers angeordnete Erstreckungsrichtungskomponente aufweist, der mittels des Dosierorgans ausgebrachte Soll-Massenstrom an Streugut zunächst vermindert und sodann erhöht wird,
um die infolge der sich verändernden Bodenneigung verursachten Unter- bzw. Überdüngungen im Bereich derselben zumindest teilweise zu kompensieren.

Bei einem Scheibenstreuer der eingangs genannten Art sieht die Erfindung zur Lösung dieser Aufgabe ferner vor, dass die Steuer- und/oder Regeleinrichtung zur Durchführung eines Verfahrens nach einem der vorangehenden Ansprüche ausgebildet ist, wobei sie beispielsweise in Steuer- und/oder regelprogrammtechnischer Weise zur Durchführung eines solchen Verfahrens eingerichtet sein kann.

Die erfindungsgemäße Ausgestaltung sorgt folglich für eine wirksame Kompensation der beim Überfahren von konkaven und/oder konvexen Krümmungen des Bodens mit senkrecht zur Fahrtrichtung des Scheibenstreuers angeordneter Erstreckungsrichtungskomponente entstehenden Streufehler, indem die in Fahrtrichtung hintereinander angeordneten Bereiche einer Über- und einer Unterdüngung dadurch vermieden werden, dass der mittels des Dosierorgans ausgebrachte Soll-Massenstrom in komplementärer Weise, insbesondere sowohl qualitativ hinsichtlich der Schaltpunkte der Dosierorgane als auch quantitativ hinsichtlich der Massenstromdifferenz, verändert wird. Nach dem Erhöhen und dem darauffolgenden Vermindern des Soll-Massenstroms an Streugut (im Falle der Fahrt über eine konkave Bodenkrümmung) bzw. nach dem Vermindern und dem darauffolgenden Erhöhen des Soll-Massenstroms an Streugut (im Falle der Fahrt über eine konkave Bodenkrümmung) kann der Massenstrom dann wieder auf den Soll-Massenstrom erhöht bzw. vermindert werden, bis sich der Scheibenstreuer der nächsten Krümmung des Bodens nähert.

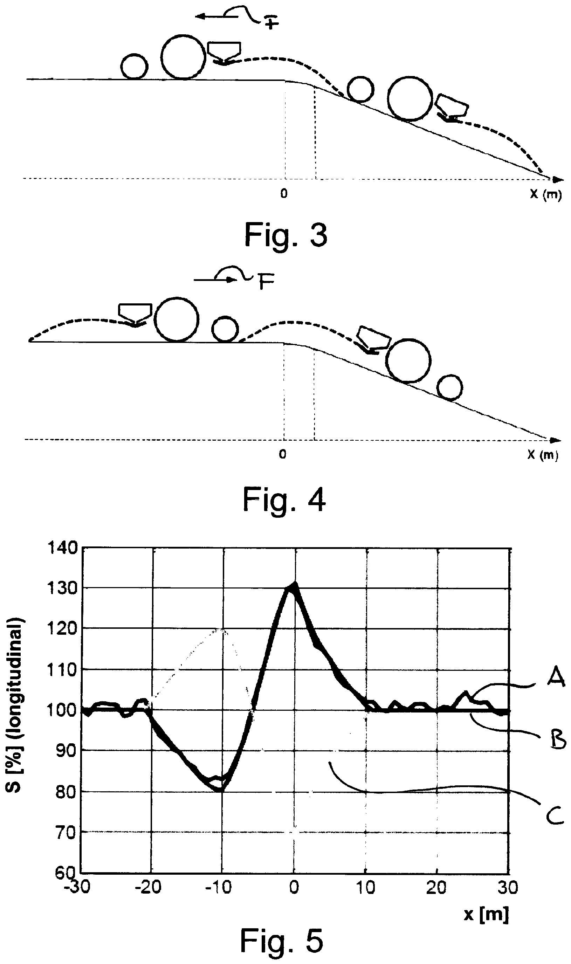

In der Praxis kann dies beispielsweise dadurch geschehen, dass in der Steuer- und/oder Regeleinrichtung des Dosierorgans Korrekturfunktionen hinterlegt werden, welche den Soll-Massenstrom verändern, wenn der Scheibenstreuer über konvexe bzw. konkave Krümmungen des Bodens fährt, wie es in der Fig. 5 veranschaulicht ist. Bei dem dortigen Schaubild ist auf der x-Achse der Fahrweg in Metern entlang einer Fahrgasse aufgetragen, welche ein Zweischeibenstreuer in positiver Richtung durchfährt, wobei sich bei x = 0 die senkrecht zur Fahrtrichtung angeordnete Scheitellinie einer - hier konkaven und sich aus der Horizontalen unter einem Neigungswinkel von 10° nach oben erstreckenden - Krümmung des Bodens befindet. Auf der y-Achse ist die ausgebrachte Streumenge S in [%] bezogen auf die Soll-Menge entlang der Fahrgasse aufgetragen. Das Bezugszeichen A bezeichnet die experimentell anhand der Aufnahme dreidimensionaler Streubilder ermittelte Kurve, wie sie sich beim Durchfahren der konkaven Bodenkrümmung ergibt, wenn mittels der Dosierorgane fortwährend der Soll-Massenstrom auf die Verteilerscheiben aufgebracht wird. Es ergibt sich im vorliegenden Fall vor der Scheitellinie (X = 0) eine Unterversorgung des Bodens um etwa 20%, während sich nahe der Scheitellinie eine Überversorgung des Bodens um etwa 30% ergibt, welche dadurch bedingt sind, dass der von den Verteilerscheiben abgeworfene Streufächer während der Überfahrt über die Bodenkrümmung gegenüber der Fahrgeschwindigkeit zunächst beschleunigt (der Scheibenstreuer neigt sich nach oben, der Streufächer wird "schneller", es ergibt sich folglich eine Unterdüngung) und sodann verlangsamt wird (der Scheibenstreuer streut aus der geneigten Lage gegen die Horizontale, der Streufächer wird "langsamer", es ergibt sich folglich eine Überdüngung). Diese experimentell ermittelte Kurve, welche aus mehreren Experimenten auch mittels Simulationsrechenverfahren errechnet werden kann, kann nun vorzugsweise geglättet werden, um kleine, vornehmlich statistische Streufehler zu eliminieren, woraufhin die in der Fig. 5 mit dem Bezugszeichen B identifizierte Kurve erhalten wird. Im vorliegenden Fall wurde die experimentell ermittelte Kurve A zu diesem Zweck mittels einer kubischen Spline-Funktion dargestellt. Wird diese Kurve B nun an der x-Achse gespiegelt, so kann die erhaltene, komplementäre Funktion C beispielsweise zur Kompensation der Unter- bzw. Überdüngung verwendet werden, indem der mittels der Dosierorgane ausgebrachte Soll-Massenstrom gemäß der Kurve C zunächst sukzessive bis auf ein Maximum (hier: + 20% des Soll-Massenstroms an Streugut desjenigen Streufächers, welcher etwa 10 m vor der Scheitellinie der Krümmung abgelegt wird) erhöht und sodann sukzessive auf sein Minimum (hier: etwa - 30% des Soll-Massenstroms an Streugut desjenigen Streufächers, welcher etwa an der Scheitellinie der Krümmung abgelegt wird) vermindert wird, wonach er sukzessive erhöht wird, bis der Soll-Massenstrom wieder erreicht worden ist (hier: bei dem etwa 10 m hinter der Scheitellinie abgelegten Streufächer), woraus sich eine gleichmäßige Streugutverteilung auf dem Boden entlang der geneigten Fahrgasse ergibt, weil die Streufehler kompensiert worden sind. Im Falle der Überfahrt über eine konvexe Krümmung des Bodens geschieht die Kompensation in umgekehrter Weise, indem der mittels der Dosierorgane ausgebrachte Soll-Massenstrom zunächst sukzessive bis auf sein Minimum vermindert und sodann sukzessive auf sein Maximum erhöht wird, wonach er sukzessive vermindert wird, bis der Soll-Massenstrom wieder erreicht worden ist (nicht gezeigt).

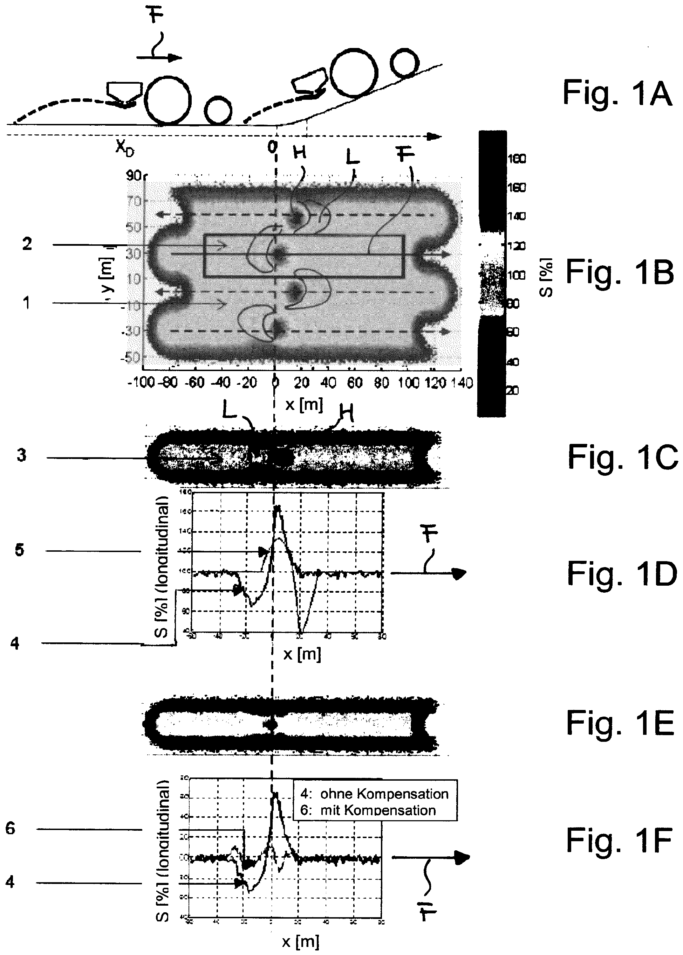

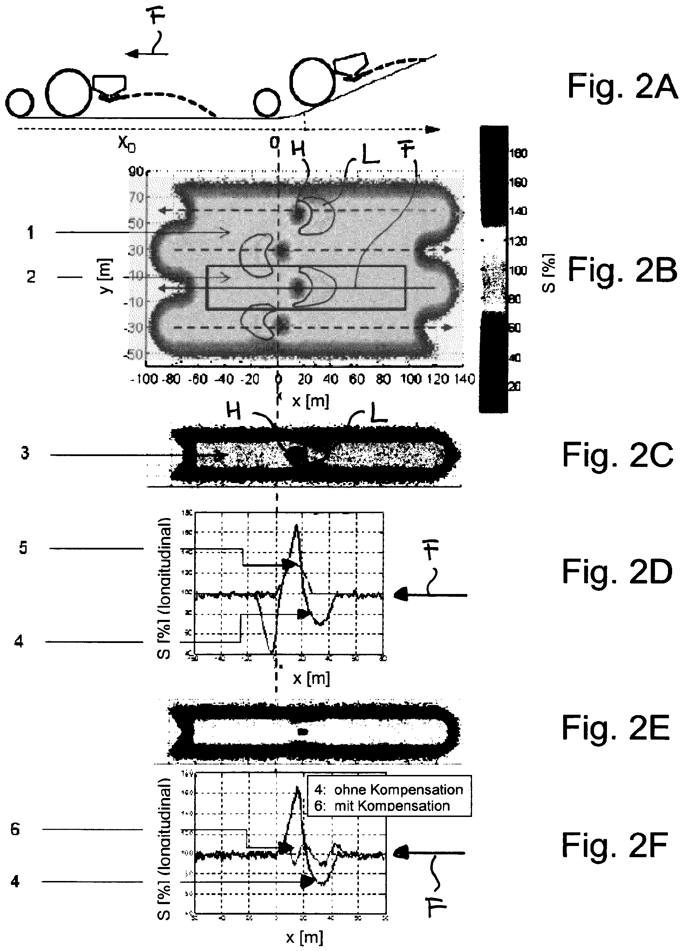

Es sei der Vollständigkeit halber darauf hingewiesen, dass bei der in der Fig. 5 mit dem Bezugszeichen C versehenen Kompensationsfunktion noch nicht berücksichtigt worden ist, dass die Dosierorgane zu einem Zeitpunkt bzw. an einer Position des Scheibenstreuers gemäß einer solchen Funktion gesteuert bzw. geregelt werden müssen, an welcher der Scheibenstreuer die jeweiligen Bereiche, in welchen eine Unter- bzw. Überdüngung droht, bereits passiert hat, weil sich der abgelegte Streufächer stets um einen Abstand, nämlich um die sogenannte Wurfweite, in Fahrtrichtung hinter dem Streuer befindet. Das Dosierorgan muss folglich zu einer Zeit bzw. an einem Ort des Scheibenstreuers gemäß dieser Kompensationsfunktion gesteuert bzw. geregelt werden, an welcher bzw. welchem sich dieser - in Fahrtrichtung betrachtet - um einen der Wurfweite etwa entsprechenden Abstand hinter diesen Bereichen befindet, d.h. die Kompensationsfunktion C verschiebt sich im Schaubild der Fig. 5 gegenüber der Verteilungskurve A nach rechts (vgl. auch weiter unten unter Bezugnahme auf die Fig. 1 und 2).

Anlässlich von Streuversuchen hat sich gezeigt, dass zur Kompensation der infolge Überfahrt über konkave und/oder konvexe Bodenkrümmungen verursachten Streufehler in aller Regel bereits vor Erreichen der Scheitellinie der Krümmung Maßnahmen getroffen werden müssen, um den Soll-Massenstrom zu verändern. In vorteilhafter Ausgestaltung kann deshalb vorgesehen sein, dass
- bei der Überfahrt einer konkaven Krümmung des Bodens, welche eine Scheitellinie mit einer senkrecht zur Fahrtrichtung des Scheibenstreuers angeordnete Erstreckungsrichtungskomponente aufweist, der mittels des Dosierorgans ausgebrachte Soll-Massenstrom an Streugut erhöht wird, bevor die Scheitellinie der konkaven Krümmung erreicht worden ist, und/oder
- bei der Überfahrt einer konvexen Krümmung des Bodens, welche eine Scheitellinie mit einer senkrecht zur Fahrtrichtung des Scheibenstreuers angeordnete Erstreckungsrichtungskomponente aufweist, der mittels des Dosierorgans ausgebrachte Soll-Massenstrom an Streugut vermindert wird, bevor die Scheitellinie der konvexen Krümmung erreicht worden ist.

Darüber hinaus hängt eine ideale Kompensation von Streufehlern, wie sie sich bei der Überfahrt über konvexe und/oder konkave Krümmungen des Bodens ergeben, von einer Vielzahl an Parametern ab, welche berücksichtigt werden sollten, um eine für die jeweilige Streusituation ideale Kompensation zu erhalten, wobei es in der Praxis in vielen Fällen ausreichen kann, nur einige dieser Parameter zu berücksichtigen und relativ geringe Streufehler aus wirtschaftlichen Gründen in Kauf zu nehmen. Als wesentliche Parameter, welche vorteilhafterweise berücksichtigt werden sollten, seien exemplarisch die physikalischen Eigenschaften des Streugutes, welche wiederum für seine aerodynamischen Flugeigenschaften verantwortlich sind, die Scheibendrehzahl sowie deren Geometrie, welche für die Geschwindigkeit verantwortlich ist, mit welcher die Streugutpartikel etwa tangential von den Verteilerscheiben abgeworfen werden, die Topologie des Bodens, wie insbesondere dessen Neigungswinkel und Krümmungsradien einschließlich der Lage ihrer Scheitellinien sowie die geometrischen Abmessungen des Scheibenstreuers bzw. des aus Zugmaschine bzw. Traktor und Scheibenstreuer gebildeten Gespanns - sei es ein an dem DreipunktKraftheber der Zugmaschine angebauter Scheibenstreuer oder sei es ein von der Zugmaschine gezogener, selbstfahrender Scheibenstreuer - erwähnt, welches seinerseits in Neigung versetzt wird, wenn er bzw. es Krümmungen des Bodens überfährt. Darüber hinaus ist insbesondere für die Lage der Schaltpunkte der Dosierorgane, an welchen ihr Soll-Massenstrom erhöht bzw. vermindert werden muss, die Fahrtrichtung des Scheibenstreuers in Bezug auf die Bodenkrümmung (hangauf- bzw. hangabwärts) entscheidend. In vorteilhafter Ausgestaltung kann daher vorgesehen sein, dass
- die Schaltpunkte, an welchen der Soll-Massenstrom vermindert bzw. erhöht wird (qualitative Kompensation), und/oder
- die Massenstromdifferenz, um welche der Soll-Massenstrom vermindert bzw. erhöht wird (quantitative Kompensation), und/oder
- der Gradient der Veränderung des Massenstroms, d.h. der Gradient, mit welchem der Massenstrom an Streugut im zeitlichen Verlauf bzw. positionsabhängig verändert wird (sukzessive quantitative Kompensation),
   in Abhängigkeit wenigstens eines Parameters aus der Gruppe
- Neigungswinkeldifferenz der überfahrenen Krümmung des Bodens mit sich verändernder Bodenneigung,
- Krümmungsradius der überfahrenen Krümmung des Bodens mit sich verändernder Bodenneigung,
- Position der Scheitellinie der überfahrenen Krümmung des Bodens mit sich verändernder Bodenneigung in Bezug auf den Scheibenstreuer,
- Fahrtrichtung in Bezug auf die überfahrene Krümmung des Bodens mit sich verändernder Bodenneigung,
- Drehzahl der Verteilerscheibe,
- Geometrie der Verteilerscheibe und/oder deren Wurfflügeln, also beispielsweise des Verteilerscheiben- bzw. Wurfflügeltyps,
- physikalische Eigenschaften des Streugutes,
- Arbeitsbreite,
- Abmessungen des Scheibenstreuers und/oder einer Zugmaschine desselben,
- Öffnungs- bzw. Schließgeschwindigkeit des Dosierorgans und
- Fahrgeschwindigkeit
ermittelt und insbesondere in der Steuer- und/oder Regeleinrichtung hinterlegt werden. Dies kann beispielsweise anhand einer Mehrzahl an Kompensationsfunktionen für den mittels des Dosierorgans dosierten Soll-Massenstroms an Streugut erfolgen, wie solchen der oben unter Bezugnahme auf die Fig. 5 genannten Art, welche experimentell oder mittels Simulationsrechenverfahren für die jeweils zu berücksichtigenden Parameter ermittelt worden sind und z.B. bedarfsweise abgerufen werden können.

Gemäß einer bevorzugten Ausführung kann in diesem Zusammenhang vorgesehen sein, dass
- die Schaltpunkte, an welchen der Soll-Massenstrom vermindert bzw. erhöht wird (qualitative Kompensation), und/oder
- die Massenstromdifferenz, um welche der Soll-Massenstrom vermindert bzw. erhöht wird (quantitative Kompensation), und/oder
- der Gradient der Veränderung des Massenstroms, d.h. der Gradient, mit welchem der Massenstrom an Streugut im zeitlichen Verlauf bzw. positionsabhängig verändert wird (sukzessive quantitative Kompensation),
in Abhängigkeit eines, beispielsweise versuchstechnisch ermittelten, Kennwertes für die Flugeigenschaften des Streugutes, insbesondere in Abhängigkeit von dessen mittleren Wurfweite, ermittelt und insbesondere in der Steuer- und/oder Regeleinrichtung hinterlegt werden. Die mittlere Wurfweite, welche durch den Abstand des Schwerpunktes des auf dem Boden abgelegten, dreidimensionalen Streubildes vom Mittelpunkt der Verteilerscheibe - bzw. im Falle eines Zweischeibenstreuers vom Mittelpunkt des Abstandes zwischen den beiden Verteilerscheiben - definiert ist, stellt folglich ein vorteilhaftes Beispiel eines zu berücksichtigenden Parameters dar, in welchen insbesondere die Drehzahl sowie der Typ der Verteilerscheibe(n) und die physikalischen Eigenschaften des Streugutes sowie gegebenenfalls die Arbeitsbreite eingehen, so dass z.B. für verschiedene Düngertypen mit ähnlichen physikalischen Eigenschaften - oder genauer: Flugeigenschaften - entsprechende Kompensationsfunktionen für verschiedenartige Krümmungsgeometrien des Bodens hinterlegt werden können.

Um die Schaltpunkte der Dosierorgane bzw. die von dem Soll-Massenstrom abweichende maximale Massenstromdifferenz oder vorzugsweise den von dem Soll-Massenstrom abweichenden Massenstromverlauf zur Erhöhung bzw. Verminderung des Soll-Massenstroms bei der Überfahrt von Bodenkrümmungen während der Streuarbeit möglichst exakt auslösen zu können, bietet es sich an, dass die aktuelle Position des Scheibenstreuers in Bezug auf Krümmungen des Bodens mit sich verändernden Bodenneigung ermittelt wird. Dies kann insbesondere dadurch geschehen, dass
- eine elektronische Feldkarte, welche zumindest die Topologie des Bodens (d.h. beispielsweise die Scheitellinien, die Krümmungsradien, die Neigungswinkel und dergleichen) umfasst und ferner selbstverständlich auch die geforderten Applikationsraten innerhalb eines Feldes etc. umfassen kann, bereitgestellt, die Position des Scheibenstreuers mittels eines Positionserfassungssystems, wie z.B. mittels eines satellitengestützten GPS-Systems oder dergleichen, bestimmt und mit der Feldkarte abgeglichen wird; oder
- die Topologie des Bodens (d.h. wiederum beispielsweise die Scheitellinien, die Krümmungsradien, die Neigungswinkel und dergleichen) mittels wenigstens eines dem Scheibenstreuer zugeordneten Sensors ermittelt wird.
Letzteres kann folglich mehr oder minder in Echtzeit während der Streuarbeit geschehen, wobei als Beispiele geeigneter Sensoren exemplarisch optische Sensoren einschließlich 3D-Laserscannern und Kameras, Radarsensoren und Neigungssensoren erwähnt seien, welche nicht notwendigerweise an dem Scheibenstreuer und/oder an dessen Zugmaschine selbst angeordnet sein müssen, sondern beispielsweise auch stationär auf dem zu bearbeitenden Feld aufgestellt oder/und beweglich, z.B. an Drohnen oder dergleichen, vorgesehen sein können und drahtlos mit der Steuer- und/oder Regeleinrichtung des Scheiben-streuers kommunizieren.

Wie bereits angedeutet, eignet sich das erfindungsgemäße Verfahren insbesondere, wenn auch nicht ausschließlich, zur Implementierung an üblichen Zweischeibenstreuern, welcher wenigstens zwei mit seitlichem Abstand voneinander angeordnete Verteilerscheiben und je ein einer jeweiligen Verteilerscheibe zugeordnetes Dosierorgan umfasst, wobei die Dosierorgane mittels einer Steuer- und/oder Regeleinrichtung, insbesondere unabhängig voneinander, auf- und zusteuerbar sind.

Im Falle eines solchen Zweischeibenstreuers kann zweckmäßigerweise vorgesehen sein, dass
- bei der Überfahrt einer konkaven Krümmung des Bodens, welche eine Scheitellinie mit einer vornehmlich senkrecht zur Fahrtrichtung des Scheibenstreuers angeordnete Erstreckungsrichtungskomponente aufweist, der mittels der Dosierorgane ausgebrachte Soll-Massenstrom an Streugut zunächst im Wesentlichen synchron erhöht und sodann im Wesentlichen synchron vermindert wird, und/oder
- bei der Überfahrt einer konvexen Krümmung des Bodens, welche eine Scheitellinie mit einer vornehmlich senkrecht zur Fahrtrichtung des Scheibenstreuers angeordnete Erstreckungsrichtungskomponente aufweist, der mittels der Dosierorgane ausgebrachte Soll-Massenstrom an Streugut zunächst im Wesentlichen synchron vermindert und sodann im Wesentlichen synchron erhöht wird.
Die Dosierorgane beider Verteilerscheiben werden folglich beispielsweise synchron gemäß derselben Kompensationsfunktion auf- und zugesteuert (oder umgekehrt), wenn der Scheibenstreuer eine Bodenkrümmung überfährt, deren Scheitellinie sich im Wesentlichen senkrecht zur Fahrtrichtung oder unter einem demgegenüber kleinen Winkel von z.B. bis zu etwa ± 45° oder insbesondere von bis zu etwa ± 30° erstreckt, wodurch immer noch eine deutlich gleichmäßigere Streugutverteilung erreicht wird als es beim Stand der Technik der Fall ist, demgemäß der von des Dosierorganen ausgerbachte Soll-Massenstrom unabhängig von der Topologie des Bodens aufrechterhalten wird.

Andererseits kann im Falle eines solchen Zweischeibenstreuers beispielsweise dann, wenn sich die von ihm überfahrene Scheitellinie einer Bodenkrümmung nicht im Wesentlichen senkrecht zur Fahrtrichtung, sondern unter einem demgegenüber relativ großen Winkel von beispielsweise größer etwa 45° oder insbesondere von größer etwa 30° erstreckt, vorgesehen sein, dass
- bei der Überfahrt einer konkaven Krümmung des Bodens, welche eine Scheitellinie mit einer sowohl senkrecht als auch parallel zur Fahrtrichtung des Scheibenstreuers angeordnete Erstreckungsrichtungskomponente, insbesondere eine vornehmlich parallel zur Fahrtrichtung angeordnete Erstreckungsrichtungskomponente, aufweist, zuerst der mittels des derjenigen Verteilerscheibe, welche die Scheitellinie der Krümmung als erstes erreicht, zugeordneten Dosierorgans ausgebrachte Soll-Massenstrom an Streugut zunächst erhöht und sodann vermindert wird, während der mittels des derjenigen Verteilerscheibe, welche die Scheitellinie der Krümmung als letztes erreicht, zugeordneten Dosierorgans ausgebrachte Soll-Massenstrom demgegenüber zeitlich versetzt zunächst erhöht und sodann vermindert wird, und/oder
- bei der Überfahrt einer konvexen Krümmung des Bodens, welche eine Scheitellinie mit einer sowohl senkrecht als auch parallel zur Fahrtrichtung des Scheibenstreuers angeordnete Erstreckungsrichtungskomponente, insbesondere eine vornehmlich parallel zur Fahrtrichtung angeordnete Erstreckungsrichtungskomponente, aufweist, zuerst der mittels des derjenigen Verteilerscheibe, welche die Scheitellinie der Krümmung als erstes erreicht, zugeordneten Dosierorgans ausgebrachte Soll-Massenstrom an Streugut zunächst vermindert und sodann erhöht wird, während der mittels des derjenigen Verteilerscheibe, welche die Scheitellinie der Krümmung als letztes erreicht, zugeordneten Dosierorgans ausgebrachte Soll-Massenstrom demgegenüber zeitlich versetzt zunächst vermindert und sodann erhöht wird.
Mittels eines solchen Zeitversatzes einer z.B. im Übrigen identischen Kompensationsfunktion, mit welcher die den Verteilerscheiben zugeordneten und unabhängig voneinander Steuer- und/oder regelbaren Dosierorgane anlässlich der Fahrt über Bodenkrümmungen beaufschlagt werden, lassen sich auch Streufehler kompensieren, wie sie bei der Überfahrt über in Bezug auf die Fahrtrichtung relativ "schräge" Bodenkrümmungen ansonsten vorkämen.

Alternativ oder zusätzlich kann zu diesem Zweck beispielsweise vorgesehen sein, dass bei der Überfahrt einer konkaven und/oder einer konvexen Krümmung des Bodens, welche eine Scheitellinie mit einer sowohl senkrecht als auch parallel zur Fahrtrichtung des Scheibenstreuers angeordnete Erstreckungsrichtungskomponente, insbesondere eine vornehmlich parallel zur Fahrtrichtung angeordnete Erstreckungsrichtungskomponente, aufweist, ferner das Streubild in Richtung des ansteigenden Hangs und/oder entgegen der Richtung des abfallenden Hangs verlagert wird, wobei selbstverständlich beide vorgenannten Maßnahmen zugleich getroffen werden können, wenn sich der Zweischeibenstreuer z.B. bereits an einem Hang befindet und hierdurch gegenüber der Horizontalen geneigt angeordnet ist, oder es kann freilich auch nur eine der beiden vorgenannten Maßnahmen getroffen werden, wenn sich der Zweischeibenstreuer z.B. etwa in der Horizontalen befindet und auf einer der Seiten rechts bzw. links zur Fahrtrichtung ein abfallendes oder ansteigendes Gefälle vorliegt, so dass das Streubild nur auf der Seite des abfallenden bzw. ansteigenden Gefälles verändert wird.

Zu diesem Zweck kann es sich beispielsweise anbieten, dass
(a) die Drehzahl der hangoberen Verteilerscheibe gegenüber der Normdrehzahl erhöht und/oder die Drehzahl der hangunteren Verteilerscheibe gegenüber der Normdrehzahl vermindert wird; und/oder
(b) der Aufgabepunkt des Streugutes auf die hangobere Verteilerscheibe nach innen und/oder der Aufgabepunkt auf die hanguntere Verteilerscheibe nach außen verlagert wird; und/oder
(c)
   - der Aufgabepunkt des Streugutes auf die hangobere Verteilerscheibe in Drehrichtung dieser Verteilerscheibe und/oder der Aufgabepunkt des Streugutes auf die hanguntere Verteilerscheibe entgegen der Drehrichtung dieser Verteilerscheibe verlagert wird, sofern es sich um einen Zweischeibenstreuer handelt, bei welchem die beiden Verteilerscheiben in einer Drehrichtung in ihrer Mitte zwischen den beiden Verteilerscheiben entgegen der Fahrtrichtung drehangetrieben sind; oder
   - der Aufgabepunkt des Streugutes auf die hangobere Verteilerscheibe entgegen der Drehrichtung dieser Verteilerscheibe und/oder der Aufgabepunkt des Streugutes auf die hanguntere Verteilerscheibe in Drehrichtung dieser Verteilerscheibe verlagert wird, sofern es sich um einen Zweischeibenstreuer handelt, bei welchem die beiden Verteilerscheiben in einer Drehrichtung in ihrer Mitte zwischen den beiden Verteilerscheiben in Fahrtrichtung drehangetrieben sind.
Die letztgenannten Vorgehensweisen unter obigem Buchstabe (b) und (c) sind, sofern sie an beiden Verteilerscheiben zugleich durchgeführt werden, in Bezug auf die Fahrt quer zu einem geneigten Hang, also vornehmlich unter Schrägneigung des Scheibenstreuers um eine Achse parallel zur Fahrtrichtung entlang einer Höhenlinie, als solche aus der eingangs zitierten EP 2 415 338 B1 bekannt. Was die Verlagerung des Aufgabepunktes in bzw. entgegen der Drehrichtung der Verteilerscheiben unter obigem Buchstabe (c) betrifft, so hängt diese von der Antriebsweise der Verteilerscheiben ab. Während bei einem üblichen Zweischeibenstreuer, bei welchem die beiden Verteilerscheiben in einer Drehrichtung in ihrer Mitte zwischen den Scheiben entgegen der Fahrtrichtung angetrieben sind (d.h. von oben betrachtet dreht sich die in Fahrtrichtung linke Verteilerscheibe im Uhrzeigersinn und die in Fahrtrichtung rechte Verteilerscheibe entgegen dem Uhrzeigersinn), existieren in der Praxis auch andere Typen von Zweischeibenstreuern mit einer Drehrichtung der Verteilerscheiben in ihrer Mitte in Fahrtrichtung (d.h. von oben betrachtet dreht sich die in Fahrtrichtung linke Verteilerscheibe entgegen dem Uhrzeigersinn und die in Fahrtrichtung rechte Verteilerscheibe im Uhrzeigersinn). Letzterer Streuertyp erfordert zur Verlagerung seines Streubildes in Richtung des ansteigenden Hangs bzw. vom abfallenden Hang fort, dass der Aufgabepunkt des Streugutes auf die hangobere Verteilerscheibe nach innen und/oder entgegen der Drehrichtung dieser Verteilerscheibe bzw. der Aufgabepunkt des Streugutes auf die hanguntere Verteilerscheibe nach außen und/oder in Drehrichtung dieser Verteilerscheibe verstellt wird, während es bei ersterem und üblicherem Streuertyp zur Verlagerung seines Streubildes in Richtung des ansteigenden Hangs bzw. vom abfallenden Hang fort vonnöten ist, dass der Aufgabepunkt des Streugutes auf die hangobere Verteilerscheibe nach innen und/oder in Drehrichtung dieser Verteilerscheibe bzw. der Aufgabepunkt des Streugutes auf die hanguntere Verteilerscheibe nach außen und/oder entgegen der Drehrichtung dieser Verteilerscheibe verstellt wird. Entsprechende Einrichtungen zur Verstellung des Aufgabepunktes des Streugutes auf die Verteilerscheiben von gattungsgemäßen Zweischeibenstreuern sind aus dem Stand der Technik bekannt, so beispielsweise aus der EP 2 057 876 A1 oder aus der EP 2 742 790 B1.

Weitere Merkmale und Vorteile der Erfindung ergeben sich aus der nachfolgenden Beschreibung von Ausführungsbeispielen unter Bezugnahme auf die Zeichnungen. Dabei zeigen:
- Fig. 1A: eine schematische Ansicht einer Situation, bei welcher ein Zweischeibenstreuer eine konkave Bodenkrümmung mit einer senkrecht zur Fahrtrichtung angeordneten Scheitellinie (bei x = 0) hangaufwärts überfährt;
- Fig. 1B: ein Schaubild der dreidimensionalen Streugutverteilung auf dem Boden, wie sie sich bei der Situation der Fig. 1A einschließlich der Anschlussfahrten des Zweischeibenstreuers gemäß dem Stand der Technik einstellt;
- Fig. 1C: den Ausschnitt 2 gemäß Fig. 1B im Detail entsprechend dem Fahrweg des Zweischeibenstreuers hangaufwärts gemäß Fig. 1A;
- Fig. 1D: ein der Fig. 5 entsprechendes Schaubild der Streugutverteilung auf dem Boden entlang der von dem Zweischeibenstreuer entsprechend Fig. 1A durchfahrenen Fahrgasse gemäß dem Stand der Technik (Kurve 4) sowie der hieraus ermittelten Kompensationsfunktion (Kurve 5) zur Steuerung bzw. Regelung des Massenstroms der Dosierorgane (Kurve 5) ;
- Fig. 1E: einen der Fig. 1C entsprechenden Ausschnitt des Schaubildes der dreidimensionalen Streugutverteilung im Detail, aber nachdem die Dosierorgane gemäß der Kompensationsfunktion (Kurve 5 der Fig. 1D) gesteuert bzw. geregelt worden sind;
- Fig. 1F: ein der Fig. 1D entsprechendes Schaubild der Streugutverteilung auf dem Boden entlang der von dem Zweischeibenstreuer durchfahrenen Fahrgasse gemäß dem Stand der Technik (Kurve 4) sowie nach Steuerung bzw. Regelung der Dosierorgane des Zweischeibenstreuers gemäß der Kompensationsfunktion entsprechend der Kurve 5 der Fig. 1D (Kurve 6) ;
- Fig. 2A: eine schematische Ansicht einer Situation, bei welcher ein Zweischeibenstreuer eine konkave Bodenkrümmung mit einer senkrecht zur Fahrtrichtung angeordneten Scheitellinie (bei x = 0) hangabwärts überfährt, wie sie einer Anschlussfahrt der Situation gemäß Fig. 1A entspricht;
- Fig. 2B: ein Schaubild der dreidimensionalen Streugutverteilung auf dem Boden, wie sie sich bei der Situation der Fig. 2A einschließlich der Anschlussfahrten des Zweischeibenstreuers gemäß dem Stand der Technik einstellt, entsprechend der Fig. 1B;
- Fig. 2C: den Ausschnitt 2 gemäß Fig. 2B im Detail entsprechend dem Fahrweg des Zweischeibenstreuers hangabwärts gemäß Fig. 2A;
- Fig. 2D: ein der Fig. 5 entsprechendes Schaubild der Streugutverteilung auf dem Boden entlang der von dem Zweischeibenstreuer entsprechend Fig. 2A durchfahrenen Fahrgasse gemäß dem Stand der Technik (Kurve 4) sowie der hieraus ermittelten Kompensationsfunktion (Kurve 5) zur Steuerung bzw. Regelung des Massenstroms der Dosierorgane (Kurve 5) ;
- Fig. 2E: einen der Fig. 2C entsprechenden Ausschnitt des Schaubildes der dreidimensionalen Streugutverteilung im Detail, aber nachdem die Dosierorgane gemäß der Kompensationsfunktion (Kurve 5 der Fig. 2D) gesteuert bzw. geregelt worden sind;
- Fig. 2F: ein der Fig. 2D entsprechendes Schaubild der Streugutverteilung auf dem Boden entlang der von dem Zweischeibenstreuer durchfahrenen Fahrgasse gemäß dem Stand der Technik (Kurve 4) sowie nach Steuerung bzw. Regelung der Dosierorgane des Zweischeibenstreuers gemäß der Kompensationsfunktion entsprechend der Kurve 5 der Fig. 2D (Kurve 6) ;
- Fig. 3: eine schematische Ansicht einer Situation, bei welcher ein Zweischeibenstreuer eine konvexe Bodenkrümmung mit einer senkrecht zur Fahrtrichtung angeordneten Scheitellinie (bei x = 0) hangaufwärts überfährt;
- Fig. 4: eine schematische Ansicht einer Situation, bei welcher ein Zweischeibenstreuer eine konvexe Bodenkrümmung mit einer senkrecht zur Fahrtrichtung angeordneten Scheitellinie (bei x = 0) hangabwärts überfährt, wie sie einer Anschlussfahrt der Situation gemäß Fig. 3 entspricht; und
- Fig. 5: ein Schaubild zur Veranschaulichung einer Ausführungsform einer Methode zur Errechnung einer geeigneten Kompensationsfunktion (Kurve C) zur Steuerung des Massenstroms der Dosierorgane eines Zweischeibenstreuers in [%] des Soll-Massenstroms entlang seinem Fahrweg in positiver x-Richtung bei der Fahrt über eine konkave Bodenkrümmung mit einer senkrecht zur Fahrtrichtung angeordneten Scheitellinie (bei x = 0) aus den ansonsten resultierenden Streufehlern (Kurve A) in Form einer Unter- und einer darauffolgenden Überdüngung.

In der Fig. 1A ist ein Zweischeibenstreuer in einer Situation schematisch wiedergegeben, in welcher dieser eine konkave Bodenkrümmung mit einer senkrecht zur Fahrtrichtung angeordneten Scheitellinie (bei x = 0) hangaufwärts überfährt. Im vorliegenden Fall erstreckt sich die Bodenkrümmung beispielsweise zwischen der Horizontalen und einem unter einem Winkel von etwa 10° nach oben geneigten Hang, wobei der Krümmungsradius der Bodenkrümmung etwa 100 m beträgt. Die Fig. 2A zeigt den Zweischeibenstreuer in einer Situation, in welcher er dieselbe Bodenkrümmung hangabwärts überfährt, wie es dem üblichen Anschlussfahren entlang parallel auf dem zu bestreuenden Feld angelegter Fahrgassen entspricht. Die Fahrtrichtung ist jeweils mit dem Bezugszeichen F gekennzeichnet.

In den Fig. 1B und 2B ist dasselbe Schaubild der dreidimensionalen Streugutverteilung auf dem Boden gezeigt, wie sie sich gemäß dem Stand der Technik, d.h. mit fortwährender Dosierung des Soll-Massenstroms an Streugut mittels der Dosierorgane, einstellt, wenn der Zweischeibenstreuer alternierende Anschlussfahrten entsprechend der Situationen gemäß Fig. 1A (entlang einer Fahrgasse hangaufwärts) und 1B (entlang einer benachbarten Fahrgasse hangabwärts) über die konkave Bodenkrümmung hinweg durchführt. Es wurden hierzu in einer Testhalle für beide Fahrweisen (hangauf- und hangabwärts) dreidimensionale Streubilder erstellt, indem die von dem Zweischeibenstreuer in verschiedenen Relativpositionen in Bezug auf die Bodenkrümmung abgeworfenen Streugutpartikel eines bestimmten Streuguttyps in einer Vielzahl an Auffangschalen gesammelt, aus deren Massenverteilung in den abgeworfenen Streufächern je ein dreidimensionales Streubild erzeugt und diese in Fahrtrichtung aneinandergefügt worden sind, wonach sie mittels Simulationsrechenverfahren seitlich (jeweils für benachbarte Fahrgassen hangauf- und hangabwärts) überlappt worden sind, wie es beim Anschlussfahren die Regel ist, um eine gleichmäßige Streugutverteilung senkrecht zur Fahrtrichtung zu erzielen. Man erkennt, dass sich - in Fahrtrichtung F betrachtet - sowohl bei der Hangaufwärtsfahrt (Fig. 1) als auch bei der Hangabwärtsfahrt (Fig. 2) im Bereich der konkaven Bodenkrümmung zunächst ein Bereich der Unterdüngung L und sodann ein Bereich der Überdüngung H ergibt, welche eine in Bezug auf die Scheitellinie der Bodenkrümmung (bei x = 0) unterschiedliche Lage besitzen, was der Tatsache geschuldet ist, dass die Streufächer unter einem Abstand, der sogenannten Wurfweite, hinter dem Zweischeibenstreuer abgelegt werden. Die Bereiche der Unterdüngung L sind aufgrund der schwarz-/ weißen Darstellung nur sehr schwer erkennbar und daher nachträglich mit einer schematischen Umrandung versehen worden.

Während die Fig. 1C den Ausschnitt 2 gemäß Fig. 1B im Detail entsprechend dem Fahrweg des Zweischeibenstreuers hangaufwärts gemäß Fig. 1A zeigt, zeigt die Fig. 2C den Ausschnitt 2 gemäß Fig. 2B im Detail entsprechend dem Fahrweg des Zweischeibenstreuers hangabwärts gemäß Fig. 2A, wobei in beiden Fällen aber nur das dreidimensionale Streubild entlang der jeweiligen Fahrgasse (hangauf- bzw. hangabwärts), also ohne Überlappung mit benachbarten Streufächern, dargestellt ist, aber gleichwohl eine entsprechende Abfolge eines unterdüngten Bereichs L, in Fahrtrichtung F gefolgt von einem überdüngten Bereich H, erkennbar ist.

In den Fig. 1D und 2D ist einerseits jeweils ein der weiter oben erörterten Fig. 5 (dortige Kurve A) entsprechendes Schaubild der Streugutverteilung S auf dem Boden (in [%] der Sollstreumenge) entlang der von dem Zweischeibenstreuer entsprechend Fig. 1A hangaufwärts bzw. Fig. 2A hangabwärts in x-Richtung durchfahrenen Fahrgassen gemäß dem Stand der Technik (Kurve 4 der Fig. 1D und 2D) gezeigt. Andererseits sind den Fig. 1D und 2D die hieraus ermittelten Kompensationsfunktionen (Kurve 5) zur Steuerung bzw. Regelung des Massenstroms der Dosierorgane (gleichfalls in [%] des Soll-Massenstroms) während der Überfahrt über die konvexe Bodenkrümmung zu entnehmen, welche infolge Spiegelung an der x-Achse im Wesentlichen zur Kurve 4 komplementär sind. Entgegen der Darstellung gemäß Fig. 5 sind in den Fig. 1D und 2D aber bereits die mittleren Wurfweiten des verwendeten Streuguttyps von hier beispielsweise etwa 20 m berücksichtigt, weshalb die jeweilige Kompensationsfunktion (Kurve 5) der Kurve 4 um diesen Abstand in x- bzw. in Fahrtrichtung nacheilt.

In den Fig. 1E und 2E ist jeweils ein den Fig. 1C und 2C entsprechenden Ausschnitt des Schaubildes der dreidimensionalen Streugutverteilung im Detail wiedergegeben, aber nachdem die Dosierorgane des Zweischeibenstreuers gemäß der jeweiligen Kompensationsfunktion (Kurve 5 der Fig. 1D bzw. 2D) gesteuert bzw. geregelt worden sind, um bei der jeweiligen Überfahrt über die konvexe Bodenkrümmung unter Berücksichtigung der mittleren Wurfweits den mittels der Dosierorgane ausgebrachten Soll-Massenstrom sowohl qualitativ als auch quantitativ zunächst zu erhöhen, sodann zu vermindern und schließlich wieder auf den Soll-Massenstrom einzustellen. Man erkennt nun im Gegensatz zu den Fig. 1C und 2C eine im Wesentlichen gleichmäßige Streugutverteilung entlang dem jeweiligen Fahrweg sowohl hangaufwärts über die konkave Bodenkrümmung (Fig. 1E) als auch hangabwärts über dieselbe konkave Bodenkrümmung (Fig. 2E).

Den Fig. 1F und 2F ist schließlich einerseits nochmals jeweils ein den Fig. 1D bzw. 2D entsprechendes Schaubild der Streugutverteilung S auf dem Boden entlang der von dem Zweischeibenstreuer in x-Richtung durchfahrenen Fahrgasse gemäß dem Stand der Technik (Kurve 4, ohne Kompensation des konstant dosierten Soll-Massenstroms), andererseits nach Steuerung bzw. Regelung der Dosierorgane des Zweischeibenstreuers gemäß der Kompensationsfunktion entsprechend der Kurve 5 der Fig. 1D (Kurve 6) gezeigt. Man erkennt, dass jegliche Unter- und Überdüngungen entlang der sich senkrecht zu der konvexe Bodenkrümmung erstreckenden Fahrgasse (x-Achse) praktisch vollständig vermieden werden, wobei es mittels der erfindungsgemäßen Soll-Massenstromkompensation im vorliegenden Fall gelungen ist, auf mit mehr als 160% der vorgesehenen Sollmenge an Streugut gemäß dem Stand der Technik (Soll-Massenstrom konstant) überdüngte Bodenbereiche weniger als 110% der vorgesehenen Sollmenge an Streugut aufzubringen, während auf mit weniger als 70% der vorgesehenen Sollmenge an Streugut gemäß dem Stand der Technik (Soll-Massenstrom konstant) unterdüngte Bodenbereich mehr als 90% der vorgesehenen Sollmenge an Streugut appliziert werden konnten.

In der Fig. 3 ist ein Zweischeibenstreuer in einer Situation schematisch wiedergegeben, in welcher dieser eine konvexe Bodenkrümmung mit einer senkrecht zur Fahrtrichtung angeordneten Scheitellinie (bei x = 0) in Analogie zur Fig. 1 hangaufwärts überfährt. Die Bodenkrümmung erstreckt sich beispielsweise zwischen der Horizontalen und einem unter einem Winkel von etwa 10° nach unten geneigten Hang, wobei der Krümmungsradius der Bodenkrümmung wiederum etwa 100 m beträgt. Die Fig. 4 zeigt den Zweischeibenstreuer in einer Situation, in welcher er dieselbe Bodenkrümmung der Fig. 3 in Analogie zur Fig. 2 hangabwärts überfährt, wie es dem üblichen Anschlussfahren entlang parallel auf dem zu bestreuenden Feld angelegter Fahrgassen entspricht. Die Fahrtrichtung ist jeweils mit dem Bezugszeichen F gekennzeichnet.

In den beiden letztgenannten Fällen, wenn der Zweischeibenstreuer die konvexe Bodenkrümmung überfährt, ergeben sich bei Aufrechterhaltung eines konstanten Soll-Massenstroms an Streugut nahe der Bodenkrümmung ähnliche Bereichs der Unter- und Überdüngung, aber in Fahrtrichtung F betrachtet in umgekehrter Abfolge. Die Massenstromkompensation geschieht in diesem Fall in analoger Weise wie oben unter Bezugnahme auf die Fig. 1 und 2 im Einzelnen erläutert, wobei die Dosierorgane nun derart gesteuert bzw. geregelt werden, dass während der Fahrt über die konvexe Bodenkrümmung unter Berücksichtigung der mittleren Wurfweite des eingesetzten Streuguttyps der Soll-Massenstrom zunächst vermindert und sodann erhöht wird, um die bei einem konstanten Soll-Massenstrom an Streugut auftretenden Streufehler zu kompensieren, wonach die Dosierorgane wieder auf den Soll-Massenstrom eingestellt werden (nicht nochmals zeichnerisch wiedergegeben).

## Patentansprüche

1. Verfahren zum gleichmäßigen Verteilen von Streugut an Lagen mit verschiedener Bodenneigung mittels eines Scheibenstreuers, welcher wenigstens eine Verteilerscheibe und wenigstens ein der Verteilerscheibe zugeordnetes Dosierorgan umfasst, wobei das Dosierorgan mittels einer Steuer- und/oder Regeleinrichtung auf- und zusteuerbar ist, **dadurch gekennzeichnet, dass**
- bei der Überfahrt einer konkaven Krümmung des Bodens, welche eine Scheitellinie mit einer senkrecht zur Fahrtrichtung (F) des Scheibenstreuers angeordnete Erstreckungsrichtungskomponente aufweist, der mittels des Dosierorgans ausgebrachte Soll-Massenstrom an Streugut zunächst erhöht und sodann vermindert wird, und/oder
- bei der Überfahrt einer konvexen Krümmung des Bodens, welche eine Scheitellinie mit einer senkrecht zur Fahrtrichtung (F) des Scheibenstreuers angeordnete Erstreckungsrichtungskomponente aufweist, der mittels des Dosierorgans ausgebrachte Soll-Massenstrom an Streugut zunächst vermindert und sodann erhöht wird, um die infolge der sich verändernden Bodenneigung verursachten Unter- (L) bzw. Überdüngungen (H) im Bereich derselben zumindest teilweise zu kompensieren.

2. Verfahren nach Anspruch 1, **dadurch gekennzeichnet, dass**
- bei der Überfahrt einer konkaven Krümmung des Bodens, welche eine Scheitellinie mit einer senkrecht zur Fahrtrichtung des Scheibenstreuers angeordnete Erstreckungsrichtungskomponente aufweist, der mittels des Dosierorgans ausgebrachte Soll-Massenstrom an Streugut erhöht wird, bevor die Scheitellinie der konkaven Krümmung erreicht worden ist, und/oder
- bei der Überfahrt einer konvexen Krümmung des Bodens, welche eine Scheitellinie mit einer senkrecht zur Fahrtrichtung des Scheibenstreuers angeordnete Erstreckungsrichtungskomponente aufweist, der mittels des Dosierorgans ausgebrachte Soll-Massenstrom an Streugut vermindert wird, bevor die Scheitellinie der konvexen Krümmung erreicht worden ist.

3. Verfahren nach Anspruch 1 oder 2, **dadurch gekennzeichnet, dass**
- Schaltpunkte, an welchen der Soll-Massenstrom vermindert bzw. erhöht wird, und/oder
- eine Massenstromdifferenz, um welche der Soll-Massenstrom vermindert bzw. erhöht wird, und/oder
- ein Gradient der Veränderung des Massenstroms in Abhängigkeit wenigstens eines Parameters aus der Gruppe
- Neigungswinkeldifferenz der überfahrenen Krümmung des Bodens mit sich verändernder Bodenneigung,
- Krümmungsradius der überfahrenen Krümmung des Bodens mit sich verändernder Bodenneigung,
- Position der Scheitellinie der überfahrenen Krümmung des Bodens mit sich verändernder Bodenneigung in Bezug auf den Scheibenstreuer,
- Fahrtrichtung in Bezug auf die überfahrene Krümmung des Bodens mit sich verändernder Bodenneigung,
- Drehzahl der Verteilerscheibe,
- Geometrie der Verteilerscheibe und/oder deren Wurfflügel,
- physikalische Eigenschaften des Streugutes,
- Arbeitsbreite,
- Abmessungen des Scheibenstreuers und/oder einer Zugmaschine desselben,
- Öffnungs- bzw. Schließgeschwindigkeit des Dosierorgans und
- Fahrgeschwindigkeit
ermittelt werden.

4. Verfahren nach einem der Ansprüche 1 bis 3, **dadurch gekennzeichnet, dass**
- die Schaltpunkte, an welchen der Soll-Massenstrom vermindert bzw. erhöht wird, und/oder
- die Massenstromdifferenz, um welche der Soll-Massenstrom vermindert bzw. erhöht wird, und/oder
- der Gradient der Veränderung des Massenstroms in Abhängigkeit eines Kennwertes für die Flugeigenschaften des Streugutes, insbesondere in Abhängigkeit von dessen mittleren Wurfweite, ermittelt werden.

5. Verfahren nach Anspruch 3 oder 4, **dadurch gekennzeichnet, dass**
- die ermittelten Schaltpunkte, an welchen der SollMassenstrom vermindert bzw. erhöht wird, und/oder
- die ermittelte Massenstromdifferenz, um welche der Soll-Massenstrom vermindert bzw. erhöht wird, und/oder
- der ermittelte Gradient der Veränderung des Massenstroms
in der Steuer- und/oder Regeleinrichtung hinterlegt werden.

6. Verfahren nach einem der Ansprüche 1 bis 5, **dadurch gekennzeichnet, dass** die aktuelle Position des Scheibenstreuers in Bezug auf Krümmungen des Bodens mit sich verändernden Bodenneigung ermittelt wird.

7. Verfahren nach Anspruch 6, **dadurch gekennzeichnet, dass**
- eine elektronische Feldkarte, welche zumindest die Topologie des Bodens umfasst, bereitgestellt, die Position des Scheibenstreuers mittels eines Positionserfassungssystems bestimmt und mit der Feldkarte abgeglichen wird; oder
- die Topologie des Bodens mittels wenigstens eines dem Scheibenstreuer zugeordneten Sensors ermittelt wird.

8. Verfahren nach einem der Ansprüche 1 bis 7, **dadurch gekennzeichnet, dass** ein Scheibenstreuer eingesetzt wird, welcher wenigstens zwei mit seitlichem Abstand voneinander angeordnete Verteilerscheiben und je ein einer jeweiligen Verteilerscheibe zugeordnetes Dosierorgan umfasst, wobei die Dosierorgane mittels der Steuer- und/oder Regeleinrichtung, insbesondere unabhängig voneinander, auf- und zusteuerbar sind.

9. Verfahren nach Anspruch 8, **dadurch gekennzeichnet, dass**
- bei der Überfahrt einer konkaven Krümmung des Bodens, welche eine Scheitellinie mit einer vornehmlich senkrecht zur Fahrtrichtung (F) des Scheibenstreuers angeordnete Erstreckungsrichtungskomponente aufweist, der mittels der Dosierorgane ausgebrachte Soll-Massenstrom an Streugut zunächst im Wesentlichen synchron erhöht und sodann im Wesentlichen synchron vermindert wird, und/oder
- bei der Überfahrt einer konvexen Krümmung des Bodens, welche eine Scheitellinie mit einer vornehmlich senkrecht zur Fahrtrichtung (F) des Scheibenstreuers angeordnete Erstreckungsrichtungskomponente aufweist, der mittels der Dosierorgane ausgebrachte Soll-Massenstrom an Streugut zunächst im Wesentlichen synchron vermindert sodann im Wesentlichen synchron erhöht wird.

10. Verfahren nach Anspruch 8 oder 9, **dadurch gekennzeichnet, dass**
- bei der Überfahrt einer konkaven Krümmung des Bodens, welche eine Scheitellinie mit einer sowohl senkrecht als auch parallel zur Fahrtrichtung (F) des Scheibenstreuers angeordnete Erstreckungsrichtungskomponente, insbesondere eine vornehmlich parallel zur Fahrtrichtung (F) angeordnete Erstreckungsrichtungskomponente, aufweist, zuerst der mittels des derjenigen Verteilerscheibe, welche die Scheitellinie der Krümmung als erstes erreicht, zugeordneten Dosierorgans ausgebrachte Soll-Massenstrom an Streugut zunächst erhöht und sodann vermindert wird, während der mittels des derjenigen Verteilerscheibe, welche die Scheitellinie der Krümmung als letztes erreicht, zugeordneten Dosierorgans ausgebrachte Soll-Massenstrom demgegenüber zeitlich versetzt zunächst erhöht und sodann vermindert wird, und/oder
- bei der Überfahrt einer konvexen Krümmung des Bodens, welche eine Scheitellinie mit einer sowohl senkrecht als auch parallel zur Fahrtrichtung (F) des Scheibenstreuers angeordnete Erstreckungsrichtungskomponente, insbesondere eine vornehmlich parallel zur Fahrtrichtung (F) angeordnete Erstreckungsrichtungskomponente, aufweist, zuerst der mittels des derjenigen Verteilerscheibe, welche die Scheitellinie der Krümmung als erstes erreicht, zugeordneten Dosierorgans ausgebrachte Soll-Massenstrom an Streugut zunächst vermindert und sodann erhöht wird, während der mittels des derjenigen Verteilerscheibe, welche die Scheitellinie der Krümmung als letztes erreicht, zugeordneten Dosierorgans ausgebrachte Soll-Massenstrom demgegenüber zeitlich versetzt zunächst vermindert und sodann erhöht wird.

11. Verfahren nach einem der Ansprüche 8 bis 10, **dadurch gekennzeichnet, dass** bei der Überfahrt einer konkaven und/oder einer konvexen Krümmung des Bodens, welche eine Scheitellinie mit einer sowohl senkrecht als auch parallel zur Fahrtrichtung (F) des Scheibenstreuers angeordnete Erstreckungsrichtungskomponente, insbesondere eine vornehmlich parallel zur Fahrtrichtung (F) angeordnete Erstreckungsrichtungskomponente, aufweist, ferner das Streubild in Richtung des ansteigenden Hangs und/oder entgegen der Richtung des abfallenden Hangs verlagert wird.

12. Verfahren nach Anspruch 11, **dadurch gekennzeichnet, dass**
(a) die Drehzahl der hangoberen Verteilerscheibe gegenüber der Normdrehzahl erhöht und/oder die Drehzahl der hangunteren Verteilerscheibe gegenüber der Normdrehzahl vermindert wird; und/oder
(b) der Aufgabepunkt des Streugutes auf die hangobere Verteilerscheibe nach innen und/oder der Aufgabepunkt auf die hanguntere Verteilerscheibe nach außen verlagert wird; und/oder
(c)
- der Aufgabepunkt des Streugutes auf die hangobere Verteilerscheibe in Drehrichtung dieser Verteilerscheibe und/oder der Aufgabepunkt des Streugutes auf die hanguntere Verteilerscheibe entgegen der Drehrichtung dieser Verteilerscheibe verlagert wird, sofern es sich um einen Zweischeibenstreuer handelt, bei welchem die beiden Verteilerscheiben in einer Drehrichtung in ihrer Mitte zwischen den beiden Verteilerscheiben entgegen der Fahrtrichtung drehangetrieben sind; oder
- der Aufgabepunkt des Streugutes auf die hangobere Verteilerscheibe entgegen der Drehrichtung dieser Verteilerscheibe und/oder der Aufgabepunkt des Streugutes auf die hanguntere Verteilerscheibe in Drehrichtung dieser Verteilerscheibe verlagert wird, sofern es sich um einen Zweischeibenstreuer handelt, bei welchem die beiden Verteilerscheiben in einer Drehrichtung in ihrer Mitte zwischen den beiden Verteilerscheiben in Fahrtrichtung drehangetrieben sind.

13. Scheibenstreuer, welcher wenigstens eine Verteilerscheibe und wenigstens ein der Verteilerscheibe zugeordnetes Dosierorgan umfasst, wobei das Dosierorgan mittels einer Steuer- und/oder Regeleinrichtung auf- und zusteuerbar ist, **dadurch gekennzeichnet, dass** die Steuer- und/oder Regeleinrichtung zur Durchführung eines Verfahrens nach einem der vorangehenden Ansprüche ausgebildet ist.

## Claims

1. Method for the uniform distribution of spreading material on areas with different ground inclination by means of a disc spreader which comprises at least one spreader disc and at least one metering element assigned to the spreader disc, wherein the metering element can be opened and closed in controlled fashion by means of a control and/or regulation device, **characterized in that**,
- during travel over a concave curvature of the ground which has an apex line with an extent direction component arranged perpendicular to the direction of travel (F) of the disc spreader, the setpoint mass flow of material for spreading discharged by means of the metering element is initially increased and then reduced, and/or,
- during travel over a convex curvature of the ground which has an apex line with an extent direction component arranged perpendicular to the direction of travel (F) of the disc spreader, the setpoint mass flow of material for spreading discharged by means of the metering element is initially reduced and then increased,
in order to at least partially compensate the areas of under-fertilization (L) and/or over-fertilization (H) caused owing to, and in the region of, the changing ground inclination.

2. Method according to Claim 1, **characterized in that**,
- during travel over a concave curvature of the ground which has an apex line with an extent direction component arranged perpendicular to the direction of travel of the disc spreader, the setpoint mass flow of material for spreading discharged by means of the metering element is increased before the apex line of the concave curvature has been reached, and/or,
- during travel over a convex curvature of the ground which has an apex line with an extent direction component arranged perpendicular to the direction of travel of the disc spreader, the setpoint mass flow of material for spreading discharged by means of the metering element is reduced before the apex line of the convex curvature has been reached.

3. Method according to Claim 1 or 2, **characterized in that**
- switching points at which the setpoint mass flow is reduced or increased, and/or
- a mass flow difference by which the setpoint mass flow is reduced or increased, and/or
- a gradient of the change of the mass flow are determined as a function of at least one parameter from the following group:
- inclination angle difference of the travelled-over curvature of the ground with changing ground inclination,
- curvature radius of the travelled-over curvature of the ground with changing ground inclination,
- position of the apex line of the travelled-over curvature of the ground with changing ground inclination in relation to the disc spreader,
- direction of travel in relation to the travelled-over curvature of the ground with changing ground inclination,
- rotational speed of the spreader disc,
- geometry of the spreader disc and/or of the spreading wings thereof,
- physical characteristics of the spreading material,
- working width,
- dimensions of the disc spreader and/or of a tractor machine thereof,
- opening and closing speed of the metering element, and
- travelling speed.

4. Method according to one of Claims 1 to 3, **characterized in that**
- the switching points at which the setpoint mass flow is reduced or increased, and/or
- the mass flow difference by which the setpoint mass flow is reduced or increased, and/or
- the gradient of the change of the mass flow are determined as a function of a characteristic value for the flight characteristics of the spreading material, in particular as a function of the mean throw range thereof.

5. Method according to Claim 3 or 4, **characterized in that**
- the determined switching points at which the setpoint mass flow is reduced or increased, and/or
- the determined mass flow difference by which the setpoint mass flow is reduced or increased, and/or
- the determined gradient of the change of the mass flow
are stored in the control and/or regulation device.

6. Method according to one of Claims 1 to 5, **characterized in that** the present position of the disc spreader in relation to curvatures of the ground with changing ground inclination is determined.

7. Method according to Claim 6, **characterized in that**
- an electronic field map which comprises at least the topology of the ground is provided, and the position of the disc spreader is determined by means of a position detection system and compared with the field map; or
- the topology of the ground is determined by means of at least one sensor assigned to the disc spreader.

8. Method according to one of Claims 1 to 7, **characterized in that** a disc spreader is used which comprises at least two spreader discs arranged with a lateral spacing to one another and in each case one metering element assigned to a respective spreader disc, wherein the metering elements can be opened and closed in controlled fashion, in particular independently of one another, by means of the control and/or regulation device.

9. Method according to Claim 8, **characterized in that**
- during travel over a concave curvature of the ground which has an apex line with an extent direction component arranged predominantly perpendicular to the direction of travel (F) of the disc spreader, the setpoint mass flow of material for spreading discharged by means of the metering elements is initially increased substantially synchronously and is then reduced substantially synchronously, and/or,
- during travel over a convex curvature of the ground which has an apex line with an extent direction component arranged predominantly perpendicular to the direction of travel (F) of the disc spreader, the setpoint mass flow of material for spreading discharged by means of the metering elements is initially reduced substantially synchronously and is then increased substantially synchronously.

10. Method according to Claim 8 or 9, **characterized in that**
- during travel over a concave curvature of the ground which has an apex line with an extent direction component arranged both perpendicular and parallel to the direction of travel (F) of the disc spreader, in particular an extent direction component arranged predominantly parallel to the direction of travel (F), firstly the setpoint mass flow of material for spreading discharged by means of the metering element assigned to that spreader disc which reaches the apex line of the curvature first is initially increased and then reduced, while the setpoint mass flow discharged by means of the metering element assigned to that spreader disc which reaches the apex line of the curvature last is initially increased and then reduced with a time offset with respect thereto, and/or
- during travel over a convex curvature of the ground which has an apex line with an extent direction component arranged both perpendicular and parallel to the direction of travel (F) of the disc spreader, in particular an extent direction component arranged predominantly parallel to the direction of travel (F), firstly the setpoint mass flow of material for spreading discharged by means of the metering element assigned to that spreader disc which reaches the apex line of the curvature first is initially reduced and then increased, while the setpoint mass flow discharged by means of the metering element assigned to that spreader disc which reaches the apex line of the curvature last is initially reduced and then increased with a time offset with respect thereto.

11. Method according to one of Claims 8 to 10, **characterized in that**, during travel over a concave and/or a convex curvature of the ground which has an apex line with an extent direction component arranged both perpendicular and parallel to the direction of travel (F) of the disc spreader, in particular an extent direction component arranged predominantly parallel to the direction of travel (F), it is furthermore provided that the spreading pattern is shifted in the direction of the upward slope and/or counter to the direction of the downward slope.

12. Method according to Claim 11, **characterized in that**
(a) the rotational speed of the spreader disc further up the slope is increased in relation to the normal rotational speed and/or the rotational speed of the spreader disc further down the slope is reduced in relation to the normal rotational speed; and/or
(b) the feed-in point of the spreading material onto the spreader disc further up the slope is shifted inwards and/or the feed-in point onto the spreader disc further down the slope is shifted outwards; and/or
(c)
- the feed-in point of the spreading material onto the spreader disc further up the slope is shifted in the direction of rotation of said spreader disc and/or the feed-in point of the spreading material onto the spreader disc further down the slope is shifted counter to the direction of rotation of said spreader disc, if a two-disc spreader is involved in the case of which the two spreader discs are driven in rotation in a direction of rotation counter to the direction of travel in their centre between the two spreader discs; or
- the feed-in point of the spreading material onto the spreader disc further up the slope is shifted counter to the direction of rotation of said spreader disc and/or the feed-in point of the spreading material onto the spreader disc further down the slope is shifted in the direction of rotation of said spreader disc, if a two-disc spreader is involved in the case of which the two spreader discs are driven in rotation in a direction of rotation in the direction of travel in their centre between the two spreader discs.

13. Disc spreader which comprises at least one spreader disc and at least one metering element assigned to the spreader disc, wherein the metering element can be opened and closed in controlled fashion by means of a control and/or regulation device, **characterized in that** the control and/or regulation device is designed for carrying out a method according to one of the preceding claims.

## Revendications

1. Procédé de distribution uniforme de produit dispersible dans les emplacements à l'inclinaison de sol différente à l'aide d'un épandeur à disque comprenant au moins un disque de distribution et au moins un organe de dosage associé au disque de distribution, l'ouverture et la fermeture de l'organe de dosage étant commandées au moyen d'un dispositif de commande et/ou de réglage, **caractérisé en ce que** :
- en cas de passage d'une courbure concave du sol présentant une ligne de sommet dont une composante de direction d'extension est orientée perpendiculairement à la direction d'avancée (F) de l'épandeur à disque, le débit massique théorique du produit dispersible épandu à l'aide de l'organe de dosage est d'abord augmenté puis diminué ; et/ou
- en cas de passage d'une courbure convexe du sol présentant une ligne de sommet dont une composante de direction d'extension est orientée perpendiculairement à la direction d'avancée (F) de l'épandeur à disque, le débit massique théorique du produit dispersible épandu à l'aide de l'organe de dosage est d'abord diminué puis augmenté, pour compenser au moins en partie dans la région correspondante le sous-dosage (L) et/ou le surdosage en engrais (H) provoqué par l'inclinaison variable du sol.

2. Procédé selon la revendication 1, **caractérisé en ce que** :
- en cas de passage d'une courbure concave du sol présentant une ligne de sommet dont une composante de direction d'extension est orientée perpendiculairement à la direction d'avancée de l'épandeur à disque, le débit massique théorique de produit dispersible épandu à l'aide de l'organe de dosage est augmenté avant que la ligne de sommet de la courbure concave soit atteinte ; et/ou
- en cas de passage d'une courbure convexe du sol présentant une ligne de sommet dont une composante de direction d'extension est orientée perpendiculairement à la direction d'avancée de l'épandeur à disque, le débit massique théorique de produit dispersible épandu à l'aide de l'organe de dosage est diminué avant que la ligne de sommet de la courbure convexe soit atteinte.

3. Procédé selon la revendication 1 ou 2, **caractérisé en ce que** l'on détermine :
- les points de bascule au niveau desquels le débit massique théorique est diminué et/ou augmenté ; et/ou
- une différence de débit massique dont le débit massique théorique est diminué et/ou augmenté ; et/ou
- un gradient de variation du débit massique ;
en fonction d'au moins un paramètre appartenant au groupe suivant :
- différence d'angle d'inclinaison de la courbure parcourue du sol avec inclinaison variable du sol ;
- rayon de courbure de la courbure parcourue du sol avec inclinaison variable du sol ;
- position de la ligne de sommet de la courbure parcourue du sol avec inclinaison variable du sol par rapport à l'épandeur à disque ;
- direction d'avancée par rapport à la courbure parcourue du sol avec inclinaison variable du sol ;
- vitesse de rotation du disque de distribution ;
- forme géométrique du disque de distribution et/ou de ses pales d'éjection ;
- propriétés physiques du produit dispersible ;
- largeur de travail ;
- dimensions de l'épandeur à disque et/ou du tracteur associé ;
- vitesse d'ouverture et/ou de fermeture de l'organe de dosage ; et
- vitesse d'avancée.

4. Procédé selon l'une quelconque des revendications 1 à 3, **caractérisé en ce que** l'on détermine :
- les points de bascule au niveau desquels le débit massique théorique est diminué et/ou augmenté ; et/ou
- la différence de débit massique dont le débit massique théorique est diminué et/ou augmenté ; et/ou
- le gradient de variation du débit massique ;
en fonction d'une valeur caractéristique des propriétés de vol du produit dispersible, notamment en fonction de sa largeur de projection moyenne.

5. Procédé selon la revendication 3 ou 4, **caractérisé en ce que** l'on met en mémoire dans le dispositif de commande et/ou de réglage :
- les points de bascule déterminés au niveau desquels le débit massique théorique est diminué et/ou augmenté ; et/ou
- la différence de débit massique déterminée dont le débit massique théorique est diminué et/ou augmenté ; et/ou
- le gradient déterminé de variation du débit massique.

6. Procédé selon l'une quelconque des revendications 1 à 5, **caractérisé en ce que** la position actuelle de l'épandeur à disque est déterminée par rapport aux courbures du sol avec inclinaison variable du sol.

7. Procédé selon la revendication 6, **caractérisé en ce que** :
- une carte électronique du terrain comprenant au moins la topologie du sol est mise à disposition, la position de l'épandeur à disque étant déterminée à l'aide d'un système de détection de position et étant compensée à l'aide de la carte du terrain ; ou
- la topologie du sol est déterminée à l'aide d'au moins un capteur associé à l'épandeur à disque.

8. Procédé selon l'une quelconque des revendications 1 à 7, **caractérisé en ce qu'**un épandeur à disque est utilisé, celui-ci comprenant au moins deux disques de distribution disposés à une certaine distance latérale l'un de l'autre ainsi que respectivement un organe de dosage associé à un disque de distribution respectif, l'ouverture et la fermeture des organes de dosage pouvant être commandées, notamment de façon indépendante, à l'aide du dispositif de commande et/ou de réglage.

9. Procédé selon la revendication 8, **caractérisé en ce que** :
- en cas de passage d'une courbure concave du sol présentant une ligne de sommet dont une composante de direction d'extension est orientée principalement perpendiculairement à la direction d'avancée (F) de l'épandeur à disque, le débit massique théorique de produit dispersible épandu à l'aide des organes de dosage est d'abord augmenté pour l'essentiel de façon synchrone puis diminué pour l'essentiel de façon synchrone ; et/ou
- en cas de passage d'une courbure convexe du sol présentant une ligne de sommet dont une composante de direction d'extension est orientée principalement perpendiculairement à la direction d'avancée (F) de l'épandeur à disque, le débit massique théorique de produit dispersible épandu à l'aide des organes de dosage est d'abord diminué pour l'essentiel de façon synchrone puis augmenté pour l'essentiel de façon synchrone.

10. Procédé selon la revendication 8 ou 9, **caractérisé en ce que** :
- en cas de passage d'une courbure concave du sol présentant une ligne de sommet dont une composante de direction d'extension est orientée autant perpendiculairement que parallèlement à la direction d'avancée (F) de l'épandeur à disque, notamment une composante de direction d'extension disposée principalement parallèlement à la direction d'avancée (F), pour commencer, le débit massique théorique de produit dispersible épandu à l'aide de l'organe de dosage associé au disque de distribution ayant atteint en premier la ligne de sommet de la courbure est d'abord augmenté puis diminué tandis que le débit massique théorique épandu à l'aide de l'organe de dosage associé au disque de distribution atteignant en dernier la ligne de sommet de la courbure est quant à lui d'abord augmenté puis diminué de façon décalée dans le temps par rapport au premier débit massique ; et/ou
- en cas de passage d'une courbure convexe du sol présentant une ligne de sommet dont une composante de direction d'extension est orientée autant perpendiculairement que parallèlement à la direction d'avancée (F) de l'épandeur à disque, notamment une composante de direction d'extension disposée principalement parallèlement à la direction d'avancée (F), pour commencer, le débit massique théorique de produit dispersible épandu à l'aide de l'organe de dosage associé au disque de distribution ayant atteint en premier la ligne de sommet de la courbure est d'abord diminué puis augmenté tandis que le débit massique théorique épandu à l'aide de l'organe de dosage associé au disque de distribution atteignant en dernier la ligne de sommet de la courbure est quant à lui d'abord diminué puis augmenté de façon décalée dans le temps par rapport au premier débit massique.

11. Procédé selon l'une quelconque des revendications 8 à 10, **caractérisé en ce qu'**en cas de passage d'une courbure concave et/ou convexe du sol présentant une ligne de sommet dont une composante de direction d'extension est orientée autant perpendiculairement que parallèlement à la direction d'avancée (F) de l'épandeur à disque, notamment une composante de direction d'extension disposée principalement parallèlement à la direction d'avancée (F), le schéma d'épandage est en outre décalé dans la direction de la pente montante et/ou dans le sens contraire de la direction de la pente descendante.

12. Procédé selon la revendication 11, **caractérisé en ce que** :
(a) la vitesse de rotation du disque de distribution supérieur par rapport à la pente est augmentée par rapport à la vitesse de rotation normale et/ou la vitesse de rotation du disque de distribution inférieur par rapport à la pente est diminuée par rapport à la vitesse de rotation normale ; et/ou
(b) le point cible du produit dispersible du disque de distribution supérieur par rapport à la pente est décalé vers l'intérieur et/ou le point cible sur le disque de distribution inférieur par rapport à la pente est décalé vers l'extérieur ; et/ou
(c)
- le point cible du produit dispersible sur le disque de distribution supérieur par rapport à la pente est décalé dans la direction de rotation de ce disque de distribution et/ou le point cible du produit dispersible sur le disque de distribution inférieur par rapport à la pente est décalé dans le sens contraire de la direction de rotation de ce disque de distribution dans la mesure où il s'agit d'un épandeur à deux disques dans lequel les deux disques de distribution sont entraînés en rotation en leur centre entre les deux disques de distribution dans une direction de rotation, dans le sens contraire de la direction d'avancée ; ou
- le point cible du produit dispersible sur le disque de distribution supérieur par rapport à la pente est décalé dans le sens contraire de la direction de rotation de ce disque de distribution et/ou le point cible du produit dispersible sur le disque de distribution inférieur par rapport à la pente est décalé dans la direction de rotation de ce disque de distribution dans la mesure où il s'agit d'un épandeur à deux disques dans lequel les deux disques de distribution sont entraînés en rotation en leur centre entre les deux disques de distribution dans une direction de rotation, dans la direction d'avancée.

13. Épandeur à disque, comprenant au moins un disque de distribution et au moins un organe de dosage associé au disque de distribution, l'ouverture et la fermeture de l'organe de dosage étant commandées à l'aide d'un dispositif de commande et/ou de réglage, **caractérisé en ce que** le dispositif de commande et/ou de réglage est réalisé de façon à mettre en oeuvre un procédé selon l'une quelconque des revendications précédentes.
